(19) 

**Europäisches Patentamt**
**European Patent Office**
**Office européen des brevets**

(11) **EP 4 623 696 A1**

(12) **EUROPEAN PATENT APPLICATION**
published in accordance with Art. 153(4) EPC

(43) Date of publication:
01.10.2025 Bulletin 2025/40

(21) Application number: 23894502.6

(22) Date of filing: 16.11.2023

(51) International Patent Classification (IPC):
*A23F 5/10* (2006.01)          *A23G 1/48* (2006.01)
*A23L 5/00* (2016.01)

(52) Cooperative Patent Classification (CPC):
A23F 5/10; A23G 1/48; A23L 5/00

(86) International application number:
PCT/JP2023/041199

(87) International publication number:
WO 2024/111493 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.11.2022 JP 2022187933

(71) Applicant: Kabaya Foods Corporation
Okayama-shi, Okayama 709-2196 (JP)

(72) Inventor: YANAGI,Tomoe
Okayama-shi, Okayama 709-2196 (JP)

(74) Representative: TBK
Bavariaring 4-6
80336 München (DE)

(54) **FOOD RAW MATERIAL AND METHOD FOR PRODUCING SAME AND FOOD**

(57) The object of the present invention is to provide a food raw material which is more easily flavored with cacao than a conventional fermented product of extraction residue of coffee while utilizing the extraction residue of coffee. A method for producing a food raw material includes a first drying step and a treatment step. In the first drying step, the extraction residue of coffee beans or the crushed material thereof is dried to obtain a dried residue. In the treatment step, the dried residue is subjected to fermentation treatment or enzyme treatment to obtain a treated product. In this treatment step, the dried residue having a mean particle diameter in the range of 0.015 mm or more and 2.20 mm or less is fermented or enzymatically treated.

EP 4 623 696 A1

**Description**

**TECHNICAL FIELD**

The present invention relates to a food raw material and a method for producing the same. The present invention also relates to a food obtained by processing the food raw material.

**BACKGROUND ART**

In the past, for the purpose of obtaining processed food using an extraction residue of coffee beans, which is a food waste material, as a raw material, "fermenting an extraction residue of coffee beans with nuruk and using the fermented product as a main raw material of chocolate-like food, that is, a cocoa-like raw material" has been proposed (for example, see Patent Document 1 below).

**PRIOR ART DOCUMENT**

**PATENT DOCUMENT**

Patent Document 1 Japanese Patent Application Laid-Open No.2022-115087

**SUMMARY OF THE INVENTION**

**PROBLEM TO BE SOLVED BY THE INVENTION**

When a food such as a chocolate-like food is produced using the fermented product as a raw material, it has been found that the flavor of the extraction residue of coffee beans (undesirable flavor of a smoky, burnt of used coffee beans which lost a good aroma) tends to be stronger than the flavor of cacao in the food. Therefore, it is difficult to say that the fermented product is useful as an alternative raw material of cacao.

An object of the present invention is to provide a food raw material which is more easily flavored with cacao than the above-mentioned fermented product while utilizing the extraction residue of coffee beans.

**MEANS FOR SOLVING THE PROBLEM**

A method for producing a food raw material according to a first aspect of the present invention includes a first drying step and a treatment step. Note that the "food" mentioned here is, for example, a food made of cacao as a raw material (for example, chocolate-like food (confectionery)). In the first drying step, the extraction residue of coffee beans is dried to obtain a dried residue. In the treatment step, the dried residue is subjected to fermentation treatment or enzyme treatment to obtain a treated product.

As a result of intensive studies of the inventor of the present application, it was revealed that a food obtained from a food raw material obtained by the method for producing the food raw material according to the present aspect has a weaker flavor of extraction residue of coffee beans and a stronger cocoa flavor than a food obtained from a food raw material obtained by a conventional method. That is, the food raw material obtained by the method for producing a food raw material according to this aspect is more likely to produce a cocoa flavor than a conventional fermented product of an extraction residue of coffee beans, while using the extraction residue of coffee beans.

A method for producing a food raw material according to a second aspect of the present invention is the method for producing a food raw material according to the first aspect, wherein in the treatment step, the dried residue having a mean particle diameter in a range of 0.015 mm or more and 2.20 mm or less is fermented or enzymatically treated.

As a result of intensive studies of the inventor of the present application, it was revealed that a food obtained from a food raw material obtained by the method for producing a food raw material according to the present aspect has a clearer taste than a food obtained from a food raw material obtained by a conventional method. Therefore, a person who eats the food can enjoy the taste more than a person who eats a food obtained from a food raw material obtained by a conventional method.

A method for producing a food raw material according to a third aspect of the present invention is the method for producing a food raw material according to the first aspect or the second aspect, wherein the treatment step includes an addition step and a reaction step. In the addition step, a microorganism or an enzyme and water are added to the dried residue to obtain a treated source-containing dried residue. In the reaction step, the treated source-containing dried residue is treated at a predetermined temperature for a predetermined time to obtain a treated product. Note that the "microorganism" used herein is, for example, koji mold or yeast.

Therefore, in this method for producing a food raw material, the fermentation treatment or the enzymatic treatment of the dried residue can be efficiently performed.

A method for producing a food raw material according to a fourth aspect of the present invention is the method for producing a food raw material according to the third aspect, further including a second drying step. In the second drying step, the treated product is dried without being squeezed.

As a result of intensive studies of the inventor of the present application, it was revealed that a food obtained from the dried product thus obtained has a weaker flavor of the extraction residue of coffee beans and a stronger cocoa flavor than a food obtained from a dried product obtained by squeezing and then drying the treated product.

A food raw material according to a fifth aspect of the present invention is obtained by the method for producing the food raw material according to any one of the first to fourth aspects.

Therefore, the food obtained from the food raw material according to this aspect has a weaker flavor of the extraction residue of coffee beans and a stronger cocoa flavor than the food obtained from the food raw material obtained by the conventional method. The food raw material according to this aspect contains isovaleraldehyde in a larger amount than food raw materials obtained by conventional methods.

A food according to a sixth aspect of the present invention is obtained by processing the food raw material according to the fifth aspect. Note that the "food" herein is, for example, a food made of cacao as a raw material (e.g., chocolate-like food (confectionery)).

Therefore, in the food according to the present aspect, the flavor of the extraction residue of coffee beans is weakened and the flavor of cacao is strengthened as compared with a food obtained from a food raw material obtained by a conventional method.

As a result of intensive studies of the inventor of the present application, it was revealed that the chocolate-like food obtained from the food raw material according to the above-described aspect can contain a larger amount of L-phenylalanine and L-alanine than the chocolate-like food obtained from the extraction residue of unfermented and unenzyme-treated coffee beans. Therefore, a person who ingests the chocolate-like food can efficiently ingest L-phenylalanine and L-alanine as compared with the case of ingesting a chocolate-like food obtained from the extraction residue of unfermented and unenzyme-treated coffee beans.

## EFFECTS OF THE INVENTION

According to the present invention, the flavor of the extraction residue of coffee beans can be weakened as compared with foods obtained from the food raw material obtained by conventional methods.

## DETAILED DESCRIPTION OF THE INVENTION

The food raw material according to the embodiment of the present invention is produced through a first drying step and a treatment step. Hereinafter, the method for producing a food raw material according to the embodiment of the present invention will be described, and then the food raw material will be described in detail.

<Method for Producing Food Raw Material>

The food raw material according to the embodiment of the present invention is produced through the first drying step and the treatment step as described above. If necessary, the first pulverization step may be provided before the first drying step, or the second pulverization step may be provided between the first drying step and the treatment step. Further, it is preferable that a second drying step is provided after the treatment step. These steps will be described in detail below.

(1) First Pulverization Step

In the first pulverization step, the extraction residue of coffee beans is pulverized. Note that in the first pulverization step, the extraction residue of coffee beans can be arbitrarily pulverized, particularly when the mean particle diameter of the extraction residue of coffee beans exceeds 2.20 mm, it is preferable that the extraction residue of coffee beans is pulverized so that the mean particle diameter becomes 2.20 mm or less. In the first pulverization step, the extraction residue of coffee beans is pulverized to obtain a first pulverized product. By pulverizing the extraction residue of coffee beans, the surface area of the extraction residue is increased, and the fermentation treatment or the enzymatic treatment in the subsequent treatment step can be efficiently performed. In the first pulverization step, the extraction residue of coffee beans is preferably pulverized so that the mean particle diameter of the pulverized product in a wet state is in the range of 0.015 mm or more and 2.20 mm or less. The mean particle diameter of the pulverized product is more preferably in the range of 0.015 mm or more and 1.80 mm or less, and still more preferably in the range of 0.015 mm or more and 1.60 mm or less. This is because the taste of the first pulverized product is clear when the mean particle diameter of the first pulverized product is within the above-mentioned range. Examples of the apparatus for realizing the first pulverization step include a food processor, a mill mixer, and a millstone grinder. The mean particle diameter herein is a median diameter, that is, a particle diameter corresponding to 50 % of the cumulative frequency in the particle diameter distribution. The mean particle diameter is measured by a laser diffraction-scattering particle diameter analyzer when the pulverized product contains substantially no particles larger than 1 mm, and is measured by a sieving test method when the pulverized product contains substantially particles larger than 1 mm. In the present application, the sieving test method is performed in accordance with the general rule of JIS Z8815:1994. In addition, in this sieving test method, wet manual sieving is performed.

(2) First Drying Step

In the first drying step, the extraction residue of coffee beans or the first pulverized product is dried to obtain a dried residue. By sufficiently drying the extraction residue of coffee beans or the first pulverized product in this manner, the storage stability of the extraction residue is improved, and it is not necessary to refrigerate or freeze the extraction residue during transportation, and the environmental load can be reduced due to the mass reduction. However, the improvement of the storage stability is not essential, and the extraction residue of coffee beans or the first pulverized product may be dried to such an extent that the improvement of the storage stability is not observed.

In the first drying step, the extraction residue of coffee beans or the first pulverized product is preferably dried until the water content thereof becomes 60 mass% or less, more preferably 55 mass% or less, still more preferably 50 mass% or less, particularly preferably 15 mass% or less.

In the first drying step, the extraction residue of coffee beans or the first pulverized product may be dehydrated or may be dried by heating. They are preferably dried by heating. The heating temperature in the heat drying method is preferably in the range of 55 °C or more and 300 °C or less, more preferably in the range of 55 °C or more and 250 °C or less., and still more preferably in the range of 90 °C or more and 200 °C or less. In addition, as an apparatus for realizing such a first drying step, an oven, in particular an oven with heaters above and below, a hot air dryer, a fluidized bed dryer, and the like.

In addition, the food obtained from the food raw material obtained by heating and drying in the first drying step has not only a lower flavor of the extraction residue of coffee beans but also a lower bitterness than the food obtained from the food raw material obtained without heating and drying. This is presumed to be because the flavor components and the bitter components of the extraction residue of coffee beans were volatilized or sublimated by heating.

Before the first drying step or the first pulverization step, the extraction residue of coffee beans or the first pulverized product may be exposed to water to remove the flavor component of the extraction residue of coffee beans remaining in the extraction residue. In this way, the flavor, bitterness, and miscellaneous taste of the extraction residue of coffee beans can be further weakened in the food obtained from the food raw material according to the embodiment of the present invention.

(3) Second Pulverization Step

In the second pulverization step, the extraction residue of coffee beans is pulverized. In the second pulverization step, the extraction residue of coffee beans can be arbitrarily pulverized. Particularly when the mean particle diameter of the extraction residue of coffee beans exceeds 2.20 mm, the extraction residue of coffee beans is preferably pulverized so that the mean particle diameter becomes 2.20 mm or less. The second pulverization step may be omitted or may be performed when the first pulverization step is performed. In the second pulverization step, the dried residue obtained in the first drying step is pulverized to obtain a second pulverized product. The surface area of the dried residue is increased by pulverizing the dried residue, and the fermentation treatment or the enzyme treatment in the treatment step as the next step can be efficiently performed. In the second pulverization step, the dried residue is preferably pulverized so that the mean particle diameter of the second pulverized product in a wet state is in the range of 0.015 mm or more and 2.20 mm or less. The mean particle diameter of the second pulverized product is more preferably in the range of 0.015 mm or more and 1.80 mm or less, and still more preferably in the range of 0.015 mm or more and 1.60 mm or less. This is because the taste of the second pulverized product is clear when the mean particle diameter of the second pulverized product is within the above range. Examples of the apparatus for realizing the second pulverization step include a food processor, a mill mixer, and a millstone grinder. The mean particle diameter referred to herein is the same as that described in the item "(1) First Pulverization Step", and is a median diameter, that is, a particle diameter corresponding to 50 % of the cumulative frequency in the particle diameter distribution. The mean particle diameter is measured by a laser diffraction-scattering particle diameter analyzer when the pulverized product contains substantially no particles larger than 1 mm, and is measured by the sieve analysis method when the pulverized product contains substantially particles larger than 1 mm, as described above. The sieving test method is the same as described above.

(4) Treatment Step

In the treatment step, the dried residue is subjected to fermentation treatment or enzyme treatment to obtain a treated product when neither the first pulverization step nor the second pulverization step is performed, and the pulverized product is subjected to fermentation treatment or enzyme treatment to obtain a treated product when at least one of the first pulverization step and the second pulverization step is performed. This treated product corresponds to the food raw material in the present application. As described above, the mean particle diameter of the dried residue and the pulverized product in a wet state is preferably in the range of 0.015 mm or more and 2.20 mm or less, more preferably in the range of 0.015 mm or more and 1.80 mm or less, and still more preferably in the range of 0.015 mm or more and 1.60 mm or less. From the viewpoint of stabilizing the flavor of the finally obtained food raw material, the particle diameter distribution of the dried residue and the pulverized product is preferably as narrow as possible. Therefore, the dried residue and the pulverized product are preferably subjected to classification treatment such as sieving before the treatment step.

The treatment method is not particularly limited, but a method comprising an addition step for adding a microorganism or an enzyme and water to the dried residue or the pulverized product to obtain a treatment source-containing dried residue or a treatment source-containing pulverized product, and a reaction step for treating the treatment source-containing dried residue or the treatment source-containing pulverized product at a predetermined temperature for a predetermined time to obtain a treated product is preferably used.

The "microorganism" herein is, for example, koji mold, yeast, or the like. The koji mold is not particularly limited as long as the object of the present invention is achieved. Examples of such koji mold include white koji mold, yellow koji mold, black koji mold and the like. Specific examples of the koji include Asper Powder ® Pro (polished rice / white koji mold), Asper Powder ® ET (polished rice / yellow koji mold), and Asper Powder ® G (unpolished rice / yellow koji mold) manufactured by Kohsei foods Inc., and koji powder (general rice koji mold) manufactured by Marukome Co.,Ltd The Asper powder ® Pro, the Asper powder ® ET, and the Asper powder ® G are koji, but the reaction caused by these is an enzymatic reaction because the koji mold is sterilized. On the other hand, since the rice koji powder is a living koji mold, the reaction caused by the rice koji powder is fermentation. Enzymes are not particularly limited as long as they can achieve the object of the present invention, and examples thereof include purified papain (endopeptidase), Koclase ® ($\alpha$-amylase), and Koclase ® P manufactured by Mitsubishi Chemical Corporation, and Umami Zyme Pulse MA (protease, glutaminase), Neulase ® F3G (lipase, protease), and Protease M "Amano" SD (protease) manufactured by Amano Enzyme Inc.

The amount of koji to be added is not particularly limited, but is preferably in the range of 1 mass% or more and 25 mass% or less, more preferably in the range of 2.5 mass% or more and 25 mass% or less, based on the dried residue or the pulverized product. The amount of the enzyme to be added is not particularly limited, but is preferably in the range of 0.05 mass% or more and 5 mass% or less, more preferably in the range of 0.1 mass% or more and 1 mass% or less, based on the dried residue or the pulverized product. The amount of water to be added is not particularly limited as long as it is an amount that can be physically stirred easily, and can be appropriately selected according to the particle diameter of the dried residue or the pulverized product. The amount of water added is preferably, for example, in the range of 20 mass% or more and 500 mass% or less based on the dried residue or the pulverized product.

The "predetermined temperature" as used herein is a reaction temperature, and may be a temperature within a temperature range recommended when the microorganism or the enzyme is used, but is preferably, for example, within a range of 40 °C or higher and 55 °C or lower.

The "predetermined time" as used herein is a reaction time, and is preferably in a range of 2.5 hours or more and 65 hours or less, more preferably in a range of 7.5 hours or more and 65 hours or less, still more preferably in a range of 12.5 hours or more and 65 hours or less, and still more preferably in a range of 25 hours or more and 65 hours or less.

(5) Second Drying Step

As mentioned above, this second drying step is optional. In the second drying step, the treated product is dried without being squeezed. As a result of diligent studies of the inventor, it was revealed that the flavor of the extraction residue of coffee beans is further weakened and the flavor of the cacao is strengthened by such a method, as compared with the case where the treated product is squeezed and dried. In the present application, the dried product of the treated product obtained through the second drying step may be regarded as a food raw material.

<Food Raw Material and Food>

The food raw material obtained as described above can be used as an alternative material for food made of cacao, for example, chocolate-like food (confectionery), but is not limited thereto and can be used widely. The "chocolate-like food" as used herein includes, for example, chocolates. The term "chocolate" means not only chocolate, quasi-chocolate and chocolate-based foods defined by the National Chocolate Industry Fair Trade Conference and the Chocolate Food Fair Trade Conference, but also those containing fats and oils as essential components and, if necessary, auxiliary materials such as sugars, milk powders, cacao materials (cacao mass, cocoa, cocoa butter), dietary fibers, fruit juice powder, fruit powder, taste materials, emulsifiers, flavors and colorants in optional proportions.

Examples of the above-mentioned oils and fats include, in addition to cocoa butter, various animal and vegetable oils and fats such as soybean oil, cottonseed oil, corn oil, sunflower oil, olive oil, palm oil, rapeseed oil, rice bran oil, sesame oil, kapok oil, coconut oil, palm kernel oil, cocoa butter substitute, babassu oil, milk fat, lard, fish oil, whale oil, etc., and hardened oils, fractionated oils, transesterified oils, etc. thereof. Among these fats and oils, cocoa butter substitute is preferably used. This is because the combined use of the food raw material according to the embodiment of the present invention and the cocoa butter substitute facilitates the production of a non-cocoa chocolate-like food.

The content of the food raw material according to the embodiment of the present invention in the chocolate-like food is preferably 43 mass% or less, more preferably in the range of 1 mass% or more and 43 mass% or less, and further preferably in the range of 2.5 mass% or more and 43 mass% or less. This is because a chocolate-like food having a good flavor and texture can be obtained by setting the content of the food raw material in this range.

Such a chocolate-like food can be produced by a method similar to a method for producing ordinary chocolate. Such a method is not particularly limited, and examples thereof include a method of rolling and conching a raw material blend obtained by blending the food raw material according to the embodiment of the present invention, the above-described fats and oils, and if necessary, auxiliary raw materials such as sugars, milk powders, cacao raw materials (cacao mass, cocoa, cocoa butter), dietary fibers, fruit juice powder, fruit powder, taste materials, emulsifiers, flavors, and colorants at an arbitrary ratio.

The chocolate-like food thus obtained preferably contains isovaleraldehyde. The food raw material may contain isovaleraldehyde.

The food raw material preferably contains taurine, L-proline, glycine, L-alanine, L-valine, L-tyrosine, L-phenylalanine, and L-lysine.

In such a case, the taurine is preferably contained in a range of 0.2 mg or more and 15 mg or less per 100 g of the food raw material, and more preferably in a range of 3 mg or more and 15 mg or less.

L-proline is preferably contained in an amount of 0.2 mg or more and 10 mg or less, more preferably 2 mg or more and 10 mg or less per 100 g of the food raw material.

The glycine is preferably contained in an amount of 0.3 mg or more and 5 mg or less, more preferably 2 mg or more and 5 mg or less per 100 g of the food raw material.

The L-alanine is preferably contained in a range of 1 mg or more and 140 mg or less per 100 g of the food raw material, and more preferably in a range of 10 mg or more and 140 mg or less.

The L-valine is preferably contained in an amount of 0.3 mg or more and 10 mg or less, more preferably 4 mg or more and 10 mg or less per 100 g of the food raw material.

In addition, The L-tyrosine is preferably contained in a range of 1 mg or more and 15 mg or less, and more preferably contained in a range of 4 mg or more and 15 mg or less per 100 g of the food raw material.

The L-phenylalanine is preferably contained in an amount of 0.6 mg or more and 12 mg, more preferably 4 mg or more and 12 mg or less per 100 g of the food raw material.

The L-Lysine is preferably contained in an amount of 0.3 mg or more and 6 mg or less, more preferably 1 mg or more and 6 mg or less per 100 g of the food raw material.

The present invention will be described in more detail below with reference to WORKING EXAMPLES and COMPARATIVE EXAMPLES. The present invention is not limited to WORKING EXAMPLES.

**WORKING EXAMPLE 1**

(1) Preparation of Cocoa-Like Raw Material

First, wet extraction residue of coffee beans was placed in an oven set to an upper heater temperature of 100 °C and a lower heater temperature of 90 °C to dry them until the water content thereof became 5 mass% or less to obtain dried residue. Next, the dried residue obtained above was pulverized with a mill mixer, and the pulverized product was sieved with a sieve having an opening of 0.850 mm to collect the pulverized product that passed through the sieve (hereinafter referred to as the "passed pulverized product"). Then, to 100 g of the passed pulverized product, 15 g of Asper powder ® Pro manufactured by Kohsei foods Inc., and 250 g of water were added, and the passed pulverized product was subjected to enzymatic treatment at 55 °C for 40 hours to obtain a treated product. Subsequently, the treated product was dried for 2 hours in an oven with the upper heater temperature set at 100 °C and the lower heater temperature set at 90 °C to obtain the desired cocoa-like raw material.

The mean particle diameter D50 (median diameter: particle diameter corresponding to 50 % of the cumulative frequency in the particle diameter distribution) of the above-described passed pulverized product in a wet state was determined using a laser diffraction/scattering particle diameter distribution analyzer (LA-96OV2 series (in-water dispersion measurement system) manufactured by HORIBA, Ltd...). Specifically, a sample was prepared by adding ion exchanged water to the passed pulverized product, and then the sample was set in the laser diffraction/scattering particle diameter distribution analyzer. Next, the sample was irradiated with ultrasonic waves for 1 minute in the laser diffraction/scattering particle diameter distribution analyzer to disperse the passed pulverized product in the sample in the ion-exchanged water. Then, the sample was immediately irradiated with a red laser and a blue laser, and when the transmittances of the red laser and the blue laser were not within the appropriate measurement range, ion-exchanged water was poured into the sample so that the transmittances were within the appropriate measurement range, and then the particle diameter was measured. As a result, the mean particle diameter was 0.529 mm.

(2) Preparation of Chocolate-Like Food

The above-mentioned cocoa-like raw material, sugar, whole milk powder, lactose, cocoa butter substitute oil and fat, soybean lecithin and vanillin were mixed to prepare a dough so that the cocoa-like raw material accounted for 10.5 mass%, sugar accounted for 33.3 mass%, whole milk powder accounted for 12.9 mass%, lactose accounted for 4.5 mass%, cocoa butter substitute oil and fat as vegetable oil and fat accounted for 38.5 mass%, soybean lecithin as emulsifier accounted for 0.2 mass% and vanillin as flavor accounted for 0.1 mass%.

(3) Evaluation of Chocolate-Like Food

Five expert panels who had a product development experience of chocolate food for four years or more and passed the examination personnel aptitude test were asked to eat the chocolate-like food to evaluate the "Deliciousness", "Strength of cacao flavor", "Weakness of flavor of extraction residue of coffee beans" and "Bitterness" of the chocolate-like food based on the evaluation criteria shown below, and finally determine the evaluation score by discussion. The expert panels were asked to put water in their mouths before and after the evaluation and reset the inside of their mouths.
The evaluation criteria for each evaluation item are as follows.

"Deliciousness"

Very good taste: 5 points
Good taste: 4 points
Acceptable taste: 3 points
Unacceptable taste: 2 points
Completely unacceptable taste: 1 point

"Strength of cocoa flavor"

Cocoa flavor is clearly felt: 5 points
Cocoa flavor is felt: 4 points
Cocoa flavor is slightly felt: 3 points
Cocoa flavor is not felt very much: 2 points
Cocoa flavor is not felt at all: 1 point

"Weakness of flavor of extraction residue of coffee beans"

No flavor of extraction residue of coffee beans was felt: 5 points
Not much flavor of extraction residue of coffee beans was felt: 4 points
Flavor of extraction residue of coffee beans was felt: 3 points
Flavor of extraction residue of coffee beans was slight felt: 2 points
Flavor of extraction residue of coffee beans was strongly felt: 1 point

"Bitterness"

Pleasant bitter taste: 5 points
Slightly pleasant bitter taste: 4 points
Not considered as either: 3 points
Slightly unpleasant bitter taste: 2 points
Unpleasant bitter taste: 1 point

When at least one of the evaluation items was evaluated as 1, the overall evaluation was evaluated as D; when at least one of the evaluation items was evaluated as 2, the overall evaluation was evaluated as C; when all the evaluation items were evaluated as 3 or more, the overall evaluation was evaluated as B; and when all the evaluation items were evaluated as 3 or more, and there were three or more items evaluated as 4 or more, the overall evaluation was evaluated as A.

The chocolate-like food obtained in this WORKING EXAMPLE was evaluated as "B" in overall evaluation, with 3 points for "Deliciousness", 3 points for "Strength of Cacao flavor", 3 points for "Weakness of flavor of extraction residue of coffee beans", and 3 points for "Bitterness" (see Table 1).

WORKING EXAMPLE 2

A cocoa-like raw material was obtained in the same manner as in WORKING EXAMPLE 1, except that the set temperature of the upper heater of the oven during the initial drying was changed to 200 °C and the set temperature of the lower heater was changed to 180 °C. Then, a chocolate-like food was prepared in the same manner as in WORKING EXAMPLE 1 and evaluated by the method in WORKING EXAMPLE 1 (the temperature setting of the oven during the second drying was as described in WORKING EXAMPLE 1). The mean particle diameter D50 of the passed pulverized product in a wet state was determined according to the method described in WORKING EXAMPLE 1, and the mean particle diameter was 0.529 mm. As a result, the obtained chocolate-like food was evaluated as "A" in overall evaluation, with 4 points for "Deliciousness", 3 points for "Strength of Cacao flavor", 4 points for "Weakness of flavor of extraction residue of coffee beans", and 4 points for "Bitterness" (see Table 1).

WORKING EXAMPLE 3

A cocoa-like raw material was obtained in the same manner as in WORKING EXAMPLE 1, except that the extraction residue of coffee beans was subjected to a freezing treatment before the initial drying. Then, a chocolate-like food was prepared in the same manner as in WORKING EXAMPLE 1 and evaluated by the method in WORKING EXAMPLE 1 (the temperature setting of the oven during the second drying was as described in WORKING EXAMPLE 1). The mean particle diameter D50 of the passed pulverized product in a wet state was determined according to the method described in WORKING EXAMPLE 1, and the mean particle diameter was 0.529 mm. As a result, the obtained chocolate-like food was evaluated as "B" in overall evaluation, with 3 points for "Deliciousness", 3 points for "Strength of Cacao flavor", 3 points for "Weakness of flavor of extraction residue of coffee beans", and 3 points for "Bitterness" (see Table 1).

WORKING EXAMPLE 4

A cocoa-like raw material was obtained in the same manner as in WORKING EXAMPLE 1, except that the extraction residue of coffee beans was exposed to a large amount of water before the initial drying. Then, a chocolate-like food was prepared in the same manner as in WORKING EXAMPLE 1 and evaluated by the method in WORKING EXAMPLE 1 (the temperature setting of the oven during the second drying was as described in WORKING EXAMPLE 1). The mean particle diameter D50 of the passed pulverized product in a wet state was determined according to the method described in WORKING EXAMPLE 1, and the mean particle diameter was 0.529 mm. As a result, the obtained chocolate-like food was evaluated as "A" in overall evaluation, with 4 points for "Deliciousness", 3 points for "Strength of Cacao flavor", 4 points for "Weakness of flavor of extraction residue of coffee beans", and 4 points for "Bitterness" (see Table 1).

(COMPARATIVE EXAMPLE 1)

(1) Preparation of Cocoa-Like Raw Material

First, the extraction residue of coffee beans (water content: 63.67 mass%) was pulverized by a mill mixer without drying, and the pulverized product was sieved using a sieve having an opening of 0.850 mm to collect the pulverized product that passed through the sieve (hereinafter referred to as the "passed extraction residue"). Then, to 275 g of the passed extraction residue, 15 g of Asper powder ® Pro manufactured by Kohsei foods Inc., and 75 g of water were added, and the passed extraction residue was subjected to enzymatic treatment at 55 °C for 40 hours to obtain a treated product. Subsequently, the treated product was dried for 2 hours in an oven with the upper heater temperature set at 100 °C and the lower heater temperature set at 90 °C to obtain the desired cocoa-like raw material.

The mean particle diameter D50 of the passed extraction residue in a wet state was determined according to the method described in WORKING EXAMPLE 1, and the mean particle diameter was 0.526 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 1. The chocolate-like food was evaluated as "C" in overall evaluation, with 3 points for "Deliciousness", 2 points for "Strength of Cacao flavor", 2 points for "Weakness of flavor of extraction residue of coffee beans", and 3 points for "Bitterness" (see Table 1).

[Table 1]

| | | Working Example 1 | Working Example 2 | Working Example 3 | Working Example 4 | Comparative Example 1 |
|---|---|---|---|---|---|---|
| Raw material | Drying treatment | Oven with upper heater 100°C /lower heater 90°C | Oven with upper heater 200°C /lower heater 180°C | Oven with upper heater 100°C /lower heater 90°C | Oven with upper heater 100°C /lower heater 90°C | N/A (Water content 63.67 %) |
| | Pretreatment | N/A | N/A | Frozen at -32 °C | Water soaking | N/A |
| Formulation | Extraction residue (g) | 100 | 100 | 100 | 100 | 275 |
| | Koji (g) | 15 | 15 | 15 | 15 | 15 |
| | Water (g) | 250 | 250 | 250 | 250 | 75 |
| Reaction condition | Reaction temperature (°C) | 55 | 55 | 55 | 55 | 55 |
| | Reaction time (hr) | 40 | 40 | 40 | 40 | 40 |
| Evaluation | Deliciousness | 3 | 4 | 3 | 4 | 3 |
| | Strength of Cacao flavor | 3 | 3 | 3 | 3 | 2 |
| | Weakness of flavor of extraction residue of coffee beans | 3 | 4 | 3 | 4 | 2 |
| | Bitterness | 3 | 4 | 3 | 4 | 3 |
| | Overall evaluation | B | A | B | A | C |

**WORKING EXAMPLE 5**

A dried residue was obtained in the same manner as in WORKING EXAMPLE 1, except that the wet extraction residue of coffee beans was placed in an oven set to an upper heater temperature of 100 °C and a lower heater temperature of 90 °C to dry them until the water content thereof became 59.75 mass%. In addition, cocoa-like raw materials were obtained in the same manner as in WORKING EXAMPLE 1, except that to 248.4 g of the passed pulverized product, 15 g of Asper powder ® Pro manufactured by Kohsei foods Inc., and 101.6 g of water were added, and the passed pulverized product was subjected to enzymatic treatment at 55 °C for 40 hours to obtain a treated product. Then, a chocolate-like food was prepared in the same manner as in WORKING EXAMPLE 1 and evaluated by the method in WORKING EXAMPLE 1 (the temperature setting of the oven during the second drying was as described in WORKING EXAMPLE 1). As a result, the obtained chocolate-like food was evaluated as "B" in overall evaluation, with 3 points for "Deliciousness", 3 points for "Strength of Cacao flavor", 3 points for "Weakness of flavor of extraction residue of coffee beans", and 4 points for "Bitterness" (see Table 2).

**WORKING EXAMPLE 6**

A dried residue was obtained in the same manner as in WORKING EXAMPLE 1, except that the wet extraction residue of coffee beans was placed in an oven set to an upper heater temperature of 100 °C and a lower heater temperature of 90 °C to dry them until the water content thereof became 54.40 mass%. In addition, cocoa-like raw materials were obtained in the same manner as in WORKING EXAMPLE 1, except that to 219.3 g of the passed pulverized product, 15 g of Asper powder ® Pro manufactured by Kohsei foods Inc., and 130.7 g of water were added, and the passed pulverized product was subjected to enzymatic treatment at 55 °C for 40 hours to obtain a treated product. Then, a chocolate-like food was prepared in the same manner as in WORKING EXAMPLE 1 and evaluated by the method in WORKING EXAMPLE 1 (the temperature setting of the oven during the second drying was as described in WORKING EXAMPLE 1). As a result, the obtained chocolate-like food was evaluated as "B" in overall evaluation, with 4 points for "Deliciousness", 4 points for "Strength of Cacao flavor", 3 points for "Weakness of flavor of extraction residue of coffee beans", and 3 points for "Bitterness" (see Table 2).

**WORKING EXAMPLE 7**

A dried residue was obtained in the same manner as in WORKING EXAMPLE 1, except that the wet extraction residue of coffee beans was placed in an oven set to an upper heater temperature of 100 °C and a lower heater temperature of 90 °C to dry them until the water content thereof became 47.19 mass%. In addition, cocoa-like raw materials were obtained in the same manner as in WORKING EXAMPLE 1, except that to 189.4 g of the passed pulverized product, 15 g of Asper powder ® Pro manufactured by Kohsei foods Inc., and 160.6 g of water were added, and the passed pulverized product was subjected to enzymatic treatment at 55 °C for 40 hours to obtain a treated product. Then, a chocolate-like food was prepared in the same manner as in WORKING EXAMPLE 1 and evaluated by the method n WORKING EXAMPLE 1 (the temperature setting of the oven during the second drying was as described in WORKING EXAMPLE 1). As a result, the obtained chocolate-like food was evaluated as "A" in overall evaluation, with 4 points for "Deliciousness", 4 points for "Strength of Cacao flavor", 4 points for "Weakness of flavor of extraction residue of coffee beans", and 4 points for "Bitterness" (see Table 2).

(COMPARATIVE EXAMPLE 2)

A passed extraction residue was obtained in the same manner as in COMPARATIVE EXAMPLE 1, except that the extraction residue of coffee beans (water content: 63.67 mass%) was replaced with an extraction residue of coffee beans (water content: 67.22 mass%). In addition, cocoa-like raw material was obtained in the same manner as in COMPARATIVE EXAMPLE 1, except that to 275.3 g of the passed extraction residue, 15 g of Asper powder ® Pro manufactured by Kohsei foods Inc., and 74.7 g of water were added, and the passed extraction residue was subjected to enzymatic treatment at 55 °C for 40 hours to obtain a treated product. Then, a chocolate-like food was prepared in the same manner as in COMPARATIVE EXAMPLE 1 and evaluated by the method in COMPARATIVE EXAMPLE 1. As a result, the obtained chocolate-like food was evaluated as "C" in overall evaluation, with 3 points for "Deliciousness", 2 points for "Strength of Cacao flavor", 2 points for "Weakness of flavor of extraction residue of coffee beans", and 3 points for "Bitterness" (see Table 2).

[TABLE 2]

| | | Working Example 1 | Working Example 5 | Working Example 6 | Working Example 7 | Comparative Example 2 |
|---|---|---|---|---|---|---|
| Raw material | Drying treatment | Oven with upper heater 100°C /lower heater 90°C | Oven with upper heater 100°C /lower heater 90°C | Oven with upper heater 100°C /lower heater 90°C | Oven with upper heater 100°C /lower heater 90°C | N/A |
| | Pretreatment | N/A | N/A | N/A | N/A | N/A |
| | Water content (%) | 5% or less | 59.75 | 54.40 | 47.19 | 67.22 |

(continued)

| | | Working Example 1 | Working Example 5 | Working Example 6 | Working Example 7 | Comparative Example 2 |
|---|---|---|---|---|---|---|
| Formulation | Extraction residue (g) | 100 | 248.4 | 219.3 | 189.4 | 275.3 |
| | Koji (g) | 15 | 15 | 15 | 15 | 15 |
| | Water (g) | 250 | 101.6 | 130.7 | 160.6 | 74.7 |
| Reaction condition | Reaction temperature (°C) | 55 | 55 | 55 | 55 | 55 |
| | Reaction time (hr) | 40 | 40 | 40 | 40 | 40 |
| Evaluation | Deliciousness | 3 | 3 | 4 | 4 | 3 |
| | Strength of Cacao flavor | 3 | 3 | 4 | 4 | 2 |
| | Weakness of flavor of extraction residue of coffee beans | 3 | 3 | 3 | 4 | 2 |
| | Bitterness | 3 | 4 | 3 | 4 | 3 |
| | Overall evaluation | B | B | B | A | C |

## WORKING EXAMPLE 8

(1) Preparation of Cocoa-Like Raw Material

A desired cocoa-like raw material was obtained in the same manner as in WORKING EXAMPLE 1, except that the mill mixer was replaced with a millstone grinder (Super Mass Colloider manufactured by Masuko Sangyo Co., Ltd.), the amount of Asper powder ® Pro added was replaced with 25 g, and the time for enzymatic treatment of the passed pulverized product was changed to 2.5 hours. Note that in this WORKING EXAMPLE, the dried residue was passed through the millstone grinder only once to be pulverized. At this time, the ratio of the mass of the Asper powder ® Pro to the mass of the passed pulverized product was 25 mass% (=25g/100g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

Five expert panels different from the experts panel in WORKING EXAMPLE 1 were asked to eat the chocolate-like food to evaluate the "Deliciousness", "Strength of cacao flavor", "Weakness of flavor of extraction residue of coffee beans" and "Bitterness" of the chocolate-like food against the reference food based on the evaluation criteria shown below, and finally determine the evaluation score by discussion. The expert panels were asked to put water in their mouths before and after the evaluation and reset the inside of their mouths.

The evaluation criteria for each evaluation item are as follows.

"Deliciousness"

Good taste: 5 points

Slightly good taste: 4 points
Normal taste: 3 points
not very tasty: 2 points
Not tasty: 1 point

"Strength of cocoa flavor"

Cocoa flavor is clearly felt: 5 points
Cocoa flavor is felt: 4 points
Cocoa flavor is slightly felt: 3 points
Cocoa flavor is not felt very much: 2 points
Cocoa flavor is not felt at all: 1 point

"Weakness of flavor of extraction residue of coffee beans"

No flavor of extraction residue of coffee beans was felt: 5 points
Not much flavor of extraction residue of coffee beans was felt: 4 points
Flavor of extraction residue of coffee beans was felt: 3 points
Flavor of extraction residue of coffee beans was slight felt: 2 points
Flavor of extraction residue of coffee beans was strongly felt: 1 point

"Bitterness"

Pleasant bitter taste: 5 points
Slightly pleasant bitter taste: 4 points
Not considered as either: 3 points
Slightly unpleasant bitter taste: 2 points
Unpleasant bitter taste: 1 point

When at least one of the evaluation items was evaluated as 1, the overall evaluation was evaluated as D; when at least one of the evaluation items was evaluated as 2, the overall evaluation was evaluated as C; when all the evaluation items were evaluated as 3 or more, the overall evaluation was evaluated as B; and when all the evaluation items were evaluated as 3 or more, and there were three or more items evaluated as 4 or more, the overall evaluation was evaluated as A.

The chocolate-like food obtained in this WORKING EXAMPLE was evaluated as "C" in overall evaluation, with 3 points for "Deliciousness", 2 points for "Strength of Cacao flavor", 3 points for "Weakness of flavor of extraction residue of coffee beans", and 3 points for "Bitterness" (see Table 3).

**WORKING EXAMPLE 9**

(1) Preparation of Cocoa-Like Raw Material

A desired cocoa-like raw material was obtained in the same manner as in WORKING EXAMPLE 1, except that the mill mixer was replaced with a millstone grinder (Super Mass Colloider manufactured by Masuko Sangyo Co., Ltd.), the amount of Asper powder ® Pro added was replaced with 25 g, and the time for enzymatic treatment of the passed pulverized product was changed to 7.5 hours. In this WORKING EXAMPLE, the dried residue was passed through the millstone grinder only once to be pulverized. At this time, the ratio of the mass of the Asper powder ® Pro to the mass of the passed pulverized product was 25 mass% (=25 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "C" in overall evaluation, with 4 points for "Deliciousness", 2 points for "Strength of Cacao flavor", 3 points for "Weakness of flavor of extraction residue of coffee beans", and 3 points for "Bitterness" (see Table 3).

**WORKING EXAMPLE 10**

(1) Preparation of Cocoa-Like Raw Material

A desired cocoa-like raw material was obtained in the same manner as in WORKING EXAMPLE 1, except that the mill mixer was replaced with a millstone grinder (Super Mass Colloider manufactured by Masuko Sangyo Co., Ltd.), the amount of Asper powder ® Pro added was replaced with 25 g, and the time for enzymatic treatment of the passed pulverized product was changed to 12.5 hours. In this WORKING EXAMPLE, the dried residue was passed through the millstone grinder only once to be pulverized. At this time, the ratio of the mass of the Asper powder ® Pro to the mass of the passed pulverized product was 25 mass% (=25 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "B" in overall evaluation, with 4 points for "Deliciousness", 3 points for "Strength of Cacao flavor", 3 points for "Weakness of flavor of extraction residue of coffee beans", and 3 points for "Bitterness" (see Table 3).

**WORKING EXAMPLE 11**

(1) Preparation of Cocoa-Like Raw Material

A desired cocoa-like raw material was obtained in the same manner as in WORKING EXAMPLE 1, except that the mill mixer was replaced with a millstone grinder (Super Mass Colloider manufactured by Masuko Sangyo Co., Ltd.), the amount of Asper powder ® Pro added was replaced with 25 g, and the time for enzymatic treatment of the passed pulverized product was changed to 20 hours. In this WORKING EXAMPLE, the dried residue was passed through the millstone grinder only once to be pulverized. At this time, the ratio of the mass of the Asper powder ® Pro to the mass of the passed pulverized product was 25 mass% (=25 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "A" in overall evaluation, with 4 points for "Deliciousness", 3 points for "Strength of Cacao flavor", 4 points for "Weakness of flavor of extraction residue of coffee beans", and 4 points for "Bitterness" (see Table 3).

**WORKING EXAMPLE 12**

(1) Preparation of Cocoa-Like Raw Material

A desired cocoa-like raw material was obtained in the same manner as in WORKING EXAMPLE 1, except that the mill mixer was replaced with a millstone grinder (Super Mass Colloider manufactured by Masuko Sangyo Co., Ltd.), and the amount of Asper powder ® Pro added was replaced with 25g. In this WORKING EXAMPLE, the dried residue was passed through the millstone grinder only once to be pulverized. At this time, the ratio of the mass of the Asper powder ® Pro to the mass of the dried residue was 25 mass% (=25 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "A" in overall evaluation, with 4 points for "Deliciousness", 4 points for "Strength of Cacao flavor", 4 points for "Weakness of flavor of extraction residue of coffee beans", and 5 points for "Bitterness" (see Table 3, Table 4, Table 6).

**WORKING EXAMPLE 13**

(1) Preparation of Cocoa-Like Raw Material

A desired cocoa-like raw material was obtained in the same manner as in WORKING EXAMPLE 1, except that the mill mixer was replaced with a millstone grinder (Super Mass Colloider manufactured by Masuko Sangyo Co., Ltd.), the amount of Asper powder ® Pro added was replaced with 25 g, and the time for enzymatic treatment of the passed pulverized product was changed to 65 hours. In this WORKING EXAMPLE, the dried residue was passed through the millstone grinder only once to be pulverized. At this time, the ratio of the mass of the Asper powder ® Pro to the mass of the passed pulverized product was 25 mass% (=25 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "A" in overall evaluation, with 4 points for "Deliciousness", 4 points for "Strength of Cacao flavor", 4 points for "Weakness of flavor of extraction residue of coffee beans", and 5 points for "Bitterness" (see Table 3).

(COMPARATIVE EXAMPLE 3)

(1) Preparation of Cocoa-Like Raw Material

A desired cocoa-like raw material was obtained in the same manner as in WORKING EXAMPLE 1, except that the mill mixer was replaced with a millstone grinder (Super Mass Colloider manufactured by Masuko Sangyo Co., Ltd.), and 15 g of the Asper powder ® Pro was replaced with 25 g of a deactivated Asper powder ® Pro. In this COMPARATIVE EXAMPLE, the dried residue was passed through the millstone grinder only once to be pulverized. At this time, the ratio of the mass of the deactivated Asper powder ® Pro to the mass of the passed pulverized product was 25 mass% (=25 g/100 g×100). The deactivated Asper powder ® Pro was prepared by heating the Asper powder ® Pro at 90 °C. The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food against the reference food was evaluated according to the method described in the section of "(3) Evaluation of Chocolate-Like Food" in WORKING EXAMPLE 8. The chocolate-like food was evaluated as "D" in overall evaluation, with 2 points for "Deliciousness", 1 point for "Strength of Cacao flavor", 1 point for "Weakness of flavor of extraction residue of coffee beans", and 2 points for "Bitterness" (see Table 3, Table 4, Table 6).

[[TABLE 3]

| | | Working Example 8 | Working Example 9 | Working Example 10 | Working Example 11 | Working Example 12 | Working Example 13 | Comparative Example 3 |
|---|---|---|---|---|---|---|---|---|
| Formulation | Extraction residue (g) | 100 | 100 | 100 | 100 | 100 | 100 | 100 |
| | Koji (g) | 25 | 25 | 25 | 25 | 25 | 25 | 25 |
| | Water (g) | 250 | 250 | 250 | 250 | 250 | 250 | 250 |
| Reaction condition | Reaction temperature (°C) | 55 | 55 | 55 | 55 | 55 | 55 | 55 |
| | Reaction time (hr) | 2.5 | 7.5 | 12.5 | 20 | 40 | 65 | 40 |
| Evaluation | Deliciousness | 3 | 4 | 4 | 4 | 4 | 4 | 2 |
| | Strength of Cacao flavor | 2 | 2 | 3 | 3 | 4 | 4 | 1 |
| | Weakness of flavor of extraction residue of coffee beans | 3 | 3 | 3 | 4 | 4 | 4 | 1 |
| | Bitterness | 3 | 3 | 3 | 4 | 5 | 5 | 2 |
| | Overall evaluation | C | C | B | A | A | A | D |

**WORKING EXAMPLE 14**

(1) Preparation of Cocoa-Like Raw Material

The desired cocoa-like raw material was obtained in the same manner as in WORKING EXAMPLE 1, except that the mill mixer was replaced with a millstone grinder (Super Mass Colloider manufactured by Masuko Sangyo Co., Ltd.), and the amount of Asper powder ® Pro added was replaced with 1 g. In this WORKING EXAMPLE, the dried residue was passed through the millstone grinder only once to be pulverized. At this time, the ratio of the mass of the Asper powder ® Pro to the mass of the passed pulverized product was 1 mass% (=1 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "B" in overall evaluation, with 4 points for "Deliciousness", 3 points for "Strength of Cacao flavor", 3 points for "Weakness of flavor of extraction residue of coffee beans", and 3 points for "Bitterness" (see Table 4).

**WORKING EXAMPLE 15**

(1) Preparation of Cocoa-Like Raw Material

The desired cocoa-like raw material was obtained in the same manner as in WORKING EXAMPLE 1, except that the mill mixer was replaced with a millstone grinder (Super Mass Colloider manufactured by Masuko Sangyo Co., Ltd.), and the amount of Asper powder ® Pro added was replaced with 5 g. In this WORKING EXAMPLE, the dried residue was passed through the millstone grinder only once to be pulverized. At this time, the ratio of the mass of the Asper powder ® Pro to the mass of the passed pulverized product was 5 mass% (=5 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "B" in overall evaluation, with 4 points for "Deliciousness", 3 points for "Strength of Cacao flavor", 3 points for "Weakness of flavor of extraction residue of coffee beans", and 3 points for "Bitterness" (see Table 4).

**WORKING EXAMPLE 16**

(1) Preparation of Cocoa-Like Raw Material

The desired cocoa-like raw material was obtained in the same manner as in WORKING EXAMPLE 1, except that the mill mixer was replaced with a millstone grinder (Super Mass Colloider, manufactured by Masuko Sangyo Co., Ltd.). In this WORKING EXAMPLE, the dried residue was passed through the millstone grinder only once to be pulverized. At this time, the ratio of the mass of the Asper powder ® Pro to the mass of the passed pulverized product was 15 mass% (=15 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "B" in overall evaluation, with 4 points for "Deliciousness", 4 points for "Strength of Cacao flavor", 3 points for "Weakness of flavor of extraction residue of coffee beans", and 3 points for "Bitterness" (see Table 4).

[TABLE 4]

| | | Working Example 14 | Working Example 15 | Working Example 16 | Working Example 12 | Comparative Example 3 |
|---|---|---|---|---|---|---|
| Formulation | Extraction residue (g) | 100 | 100 | 100 | 100 | 100 |
| | Koji (g) | 1 | 5 | 15 | 25 | 25 |
| | Water (g) | 250 | 250 | 250 | 250 | 250 |
| Reaction condition | Reaction temperature (°C) | 55 | 55 | 55 | 55 | 55 |
| | Reaction time (hr) | 40 | 40 | 40 | 40 | 40 |
| Evaluation | Deliciousness | 4 | 4 | 4 | 4 | 2 |
| | Strength of Cacao flavor | 3 | 3 | 4 | 4 | 1 |
| | Weakness of flavor of extraction residue of coffee beans | 3 | 3 | 3 | 4 | 1 |
| | Bitterness | 3 | 3 | 3 | 5 | 2 |
| | Overall evaluation | B | B | B | A | D |

**WORKING EXAMPLE 17**

The desired cocoa-like raw material was obtained in the same manner as in WORKING EXAMPLE 1, except that coffee beans coarsely grinded in a coffee grinder and the extraction residue of the coarse coffee beans was obtained by extracting coffee ingredients with hot water from the coarse coffee beans, and the extraction residue of the coarse coffee beans in a wet state was put into an oven with the upper heater temperature set at 100 °C and the lower heater temperature set at 90 °C and dried until the water content reached 8.32 wt% to obtain a dried residue, and the dried residue was not pulverized and sieved, and 15 g of Asper powder ® Pro manufactured by Kohsei foods Inc., and 250 g of water were added to the dried residue 100 g, and the dried residue was enzymatically treated at 55 °C for 40 hours to obtain a treated product. The mean particle diameter D50 of the dried residue in a wet state was determined in accordance with the general rule of the sieve test method (JIS Z8815:1994), and the mean particle diameter was 2.17 mm. Then, a chocolate-like food was prepared from the cocoa-like raw material in the same manner as in WORKING EXAMPLE 1, and the chocolate-like food was evaluated by the method in WORKING EXAMPLE 1 (the temperature setting of the oven during the second drying was as described in WORKING EXAMPLE 1). As a result, the obtained chocolate-like food was evaluated as "B" in overall evaluation, with 3 points for "Deliciousness", 3 points for "Strength of Cacao flavor", 3 points for "Weakness of flavor of extraction residue of coffee beans", and 3 points for "Bitterness" (see Table 5).

**WORKING EXAMPLE 18**

The desired cocoa-like raw material was obtained in the same manner as in WORKING EXAMPLE 1, except that the mill mixer was replaced with a millstone grinder (Super Mass Colloider, manufactured by Masuko Sangyo Co., Ltd.), and 6 times of amount of water was added to dried residue to prepare wet residue, the wet residue was passed through the millstone grinder 7 times repeatedly to be pulverized, and the pulverized product was placed in an oven with the upper heater temperature set at 100 °C and the lower heater temperature set at 90 °C, and re-dried until the water content reached 5 wt% or less to obtain a re-dried residue, and the re-dried residue was sieved using a sieve with an opening of 0.850 mm to collect a passed pulverized product. The mean particle diameter D50 of the passed pulverized product in a wet state was determined according to the method described in WORKING EXAMPLE 1, and the mean particle diameter was 0.01799 mm. Then, a chocolate-like food was prepared from the cocoa-like raw material in the same manner as in WORKING EXAMPLE 1, and the chocolate-like food was evaluated by the method in WORKING EXAMPLE 1 (the temperature setting of the oven during the second drying was as described in WORKING EXAMPLE 1). As a result, the obtained chocolate-like food was evaluated as "B" in overall evaluation, with 4 points for "Deliciousness", 4 points for "Strength of Cacao flavor", 3 points for "Weakness of flavor of extraction residue of coffee beans", and 3 points for "Bitterness" (see Table 5).

[TABLE 5]

|  |  | Working Example 16 | Working Example 17 | Working Example 18 |
|---|---|---|---|---|
| Pulverized product | Mean particle diameter (mm) | 0.483 | 2.17 | 0.01799 |
| Evaluation | Deliciousness | 4 | 3 | 4 |
|  | Strength of Cacao flavor | 4 | 3 | 4 |
|  | Weakness of flavor of extraction residue of coffee beans | 3 | 3 | 3 |
|  | Bitterness | 3 | 3 | 3 |
|  | Overall evaluation | B | B | B |

**WORKING EXAMPLE 19**

(1) Preparation of Cocoa-Like Raw Material

The desired cocoa-like raw material was obtained in the same manner as in WORKING EXAMPLE 1, except that the mill mixer was replaced with a millstone grinder (Super Mass Colloider manufactured by Masuko Sangyo Co., Ltd.), and 15 g of the Asper powder ® Pro was replaced with 25 g of Asper powder ® ET manufactured by Kohsei foods Inc.. In this WORKING EXAMPLE, the dried residue was passed through the millstone grinder only once to be pulverized. At this time, the ratio of the mass of the Asper powder ® ET to the mass of the passed pulverized product was 25 mass% (=25 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "B" in overall evaluation, with 3 points for "Deliciousness", 3 points for "Strength of Cacao flavor", 3 points for "Weakness of flavor of extraction residue of coffee beans", and 3 points for "Bitterness" (see Table 6).

**WORKING EXAMPLE 20**

(1) Preparation of Cocoa-Like Raw Material

The desired cocoa-like raw material was obtained in the same manner as in WORKING EXAMPLE 1, except that the mill mixer was replaced with a millstone grinder (Super Mass Colloider manufactured by Masuko Sangyo Co., Ltd.),

and 15 g of the Asper powder ® Pro was replaced with 25 g of Asper powder ® G manufactured by Kohsei foods Inc.. In this WORKING EXAMPLE, the dried residue was passed through the millstone grinder only once to be pulverized. At this time, the ratio of the mass of the Asper powder ® G to the mass of the passed pulverized product was 25 mass% (=25 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "B" in overall evaluation, with 4 points for "Deliciousness", 3 points for "Strength of Cacao flavor", 3 points for "Weakness of flavor of extraction residue of coffee beans", and 3 points for "Bitterness" (see Table 6).

**WORKING Example 21**

(1) Preparation of Cocoa-Like Raw Material

The desired cocoa-like raw material was obtained in the same manner as in WORKING EXAMPLE 1, except that the mill mixer was replaced with a millstone grinder (Super Mass Colloider manufactured by Masuko Sangyo Co., Ltd.), 15 g of the Asper powder ® Pro was replaced with 0.5 g of purified papain manufactured by Mitsubishi Chemical Co., Ltd., the time for enzymatic treatment of the passed pulverized product was changed to 20 hours, and the temperature for enzymatic treatment was changed to 40 °C. In this WORKING EXAMPLE, the dried residue was passed through the millstone grinder only once to be pulverized. At this time, the ratio of the mass of the purified papain to the mass of the dried residue was 0.5 mass% (=0.5 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "B" in overall evaluation, with 4 points for "Deliciousness", 3 points for "Strength of Cacao flavor", 3 points for "Weakness of flavor of extraction residue of coffee beans", and 3 points for "Bitterness" (see Table 6).

**WORKING Example 22**

(1) Preparation of Cocoa-Like Raw Material

The desired cocoa-like raw material was obtained in the same manner as in WORKING EXAMPLE 1, except that the mill mixer was replaced with a millstone grinder (Super Mass Colloider manufactured by Masuko Sangyo Co., Ltd.), 15 g of the Asper powder ® Pro was replaced with 0.5 g of Koklase ® manufactured by Mitsubishi Chemical Co., Ltd., the time for enzymatic treatment of the passed pulverized product was changed to 20 hours, and the temperature for enzymatic treatment was changed to 40 °C. In this WORKING EXAMPLE, the dried residue was passed through the millstone grinder only once to be pulverized. At this time, the ratio of the mass of Koclase ® to the mass of the passed pulverized product was 0.5 mass% (=0.5 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "B" in overall evaluation, with 4 points for "Deliciousness", 3 points for "Strength of Cacao flavor", 3 points for "Weakness of flavor of extraction residue of coffee beans", and 3 points for "Bitterness" (see Table 6).

**WORKING EXAMPLE 23**

(1) Preparation of Cocoa-Like Raw Material

The desired cocoa-like raw material was obtained in the same manner as in WORKING EXAMPLE 1, except that the mill mixer was replaced with a millstone grinder (Super Mass Colloider, manufactured by Masuko Sangyo Co., Ltd.), 15 g of the Asper powder ® Pro was replaced with 0.5 g of Newrase ® F3G manufactured by Amano Enzyme Inc., the time for enzymatic treatment of the passed pulverized product was changed to 20 hours, and the temperature for enzymatic treatment was changed to 40 °C. In this WORKING EXAMPLE, the dried residue was passed through the millstone grinder only once to be pulverized. At this time, the ratio of the mass of Newrase ® F3G to the mass of the passed pulverized product was 0.5 mass% (=0.5 g/100 g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "B" in overall evaluation, with 4 points for "Deliciousness", 3 points for "Strength of Cacao flavor", 3 points for "Weakness of flavor of extraction residue of coffee beans", and 3 points for "Bitterness" (see Table 6).

**WORKING EXAMPLE 24**

(1) Preparation of Cocoa-Like Raw Material

The desired cocoa-like raw material was obtained in the same manner as in WORKING EXAMPLE 1, except that the mill mixer was replaced with a millstone grinder (Super Mass Colloider, manufactured by Masuko Sangyo Co., Ltd.), 15 g pf the Asper powder ® Pro was replaced with 0.5 g of Protease M "Amano" SD manufactured by Amano Enzyme Inc., the time for enzymatic treatment of the passed pulverized product was changed to 20 hours, and the temperature for enzymatic treatment was changed to 40 °C. In this WORKING EXAMPLE, the dried residue was passed through the millstone grinder only once to be pulverized. At this time, the ratio of the mass of Protease M "Amano" SD to the mass of the passed pulverized product was 0.5 mass% (=0.5g/100g×100). The mean particle diameter D50 of the passed pulverized product in a wet state was determined according to the method described in WORKING EXAMPLE 1, and the mean particle diameter was 0.483 mm.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 8. The chocolate-like food was evaluated as "A" in overall evaluation, with 4 points for "Deliciousness", 4 points for "Strength of Cacao flavor", 4 points for "Weakness of flavor of extraction residue of coffee beans", and 4 points for "Bitterness" (see Table 6).

[TABLE 6]

| | | | Working Example 12 | Working Example 19 | Working Example 20 | Working Example 21 | Working Example 22 | Working Example 23 | Working Example 24 | Comparative Example 3 |
|---|---|---|---|---|---|---|---|---|---|---|
| Formulation | Extraction residue (g) | | 100 | 100 | 100 | 100 | 100 | 100 | 100 | 100 |
| | Koji or Enzyme | Amount added (g) | 25 | 25 | 25 | 0.5 | 0.5 | 0.5 | 0.5 | 25 |
| | | Type | Asper powder ® Pro | Asper powder ® ET | Asper powder ® G | purified papain | Koklase ® | Newrase ® F3G | Protease M "Amano" SD | deactivated Asper powder ® Pro |
| | Water (g) | | 250 | 250 | 250 | 250 | 250 | 250 | 250 | 250 |
| Reaction condition | Reaction temperature (°C) | | 55 | 55 | 55 | 40 | 40 | 40 | 40 | 55 |
| | Reaction time (hr) | | 40 | 40 | 40 | 20 | 20 | 20 | 20 | 40 |
| Evaluation | Deliciousness | | 4 | 3 | 4 | 4 | 4 | 4 | 4 | 2 |
| | Strength of Cacao flavor | | 4 | 3 | 3 | 3 | 3 | 3 | 4 | 1 |
| | Weakness of flavor of extraction residue of coffee beans | | 4 | 3 | 3 | 3 | 3 | 3 | 4 | 1 |
| | Bitterness | | 5 | 3 | 3 | 3 | 3 | 3 | 4 | 2 |
| | Overall evaluation | | A | B | B | B | B | B | A | D |

## WORKING EXAMPLE 25

(1) Preparation of Cocoa-Like Raw Material

A dried residue was obtained in the same manner as in WORKING EXAMPLE 1. The water content was 9.17 mass%. The mean particle diameter D50 of the dried residue in a wet state was determined in accordance with the general rule of the sieve test method (JIS Z8815:1994), and the mean particle diameter was 1.64 mm. Then, after adding 600 g of warm water at about 30 °C to 800 g of the dried residue in two portions without pulverizing and sieving the dried residue, the dried residue was steamed for 50 minutes to obtain a steamed product. Next, 80 g of the steamed product was placed in a plastic bag, and the steamed product in the plastic bag was inoculated with Aspergillus oryzae (for miso) so that the number of spores of Aspergillus oryzae per 1 g of steamed product was $1 \times 10^7$ cfu (that is, the koji mold was inoculated at $80 \times 10^7$ cfu per 80 g of the steamed product.). Then, the koji mold was cultured in the steamed product at 35 °C as it was, and after 24 hours from the inoculation of the koji mold, the koji mold was cultured at 37.5 °C for 48 hours to obtain a koji-made product. The relative humidity during the koji mold culture was 90 % for the entire period. Subsequently, to the 30 g of the koji-made product, 30 g of a passed pulverized product (a passed pulverized product obtained by the same method as that in WORKING EXAMPLE 1) and 150 g of water were added, and the mixture was fermented at 55 °C for 40 hours to obtain a treated product. Subsequently, the treated product was dried for 2 hours in an oven with the upper heater temperature set at 100 °C and the lower heater temperature set at 90 °C to obtain the desired cocoa-like raw material.

(2) Preparation of Chocolate-Like Food

A chocolate-like food was prepared according to the method described in the section of "(2) Preparation of Chocolate-Like Food" of WORKING EXAMPLE 1.

(3) Evaluation of Chocolate-Like Food

The chocolate-like food was evaluated according to the method described in the section of "(3) Evaluation of Chocolate-Like Food" in WORKING EXAMPLE 1. The chocolate-like food was evaluated as "A" in overall evaluation, with 4 points for "Deliciousness", 4 points for "Strength of Cacao flavor", 3 points for "Weakness of flavor of extraction residue of coffee beans", and 5 points for "Bitterness" (see Table 7).

## WORKING EXAMPLE 26

The desired cocoa-like raw material was obtained in the same manner as in WORKING EXAMPLE 25, except that Koji mold of Aspergillus oryzae (for miso) was replaced with Koji mold of Aspergillus luchuensis (for shochu). Then, chocolate-like food product was prepared in the same manner as in WORKING EXAMPLE 1, and the chocolate-like food product was evaluated by the method in Example 1. As a result, the obtained chocolate-like food was evaluated as "A" in overall evaluation, with 4 points for "Deliciousness", 3 points for "Strength of Cacao flavor", 4 points for "Weakness of flavor of extraction residue of coffee beans", and 4 points for "Bitterness" (see Table 7).

## WORKING EXAMPLE 27

The desired cocoa-like raw material was obtained in the same manner as in WORKING EXAMPLE 25, except that Aspergillus oryzae (for miso) was replaced with Aspergillus oryzae (for soy sauce). Then, chocolate-like food product was prepared in the same manner as in WORKING EXAMPLE 1, and the chocolate-like food product was evaluated by the method in WORKING EXAMPLE 1. As a result, the obtained chocolate-like food was evaluated as "A" in overall evaluation, with 4 points for "Deliciousness", 4 points for "Strength of Cacao flavor", 4 points for "Weakness of flavor of extraction residue of coffee beans", and 4 points for "Bitterness" (see Table 7).

[TABLE 7]

| | | Working Example 25 | Working Example 26 | Working Example 27 |
|---|---|---|---|---|
| Fermentation | Aspergillus oryzae | Aspergillus oryzae (for Miso) | Aspergillus luchuensis (for shochu) | Aspergillus oryzae (for soy sauce) |

(continued)

| | | Working Example 25 | Working Example 26 | Working Example 27 |
|---|---|---|---|---|
| Evaluation | Deliciousness | 4 | 4 | 4 |
| | Strength of Cacao flavor | 4 | 3 | 4 |
| | Weakness of flavor of extraction residue of coffee beans | 3 | 4 | 4 |
| | Bitterness | 5 | 4 | 4 |
| | Overall evaluation | A | A | A |

**WORKING EXAMPLE 28**

(1) Preparation of Cocoa-Like Raw Material

First, wet extraction residue of coffee beans was placed in an oven set to an upper heater temperature of 100 °C and a lower heater temperature of 90 °C to dry them until the water content thereof became 5 mass% or less to obtain dried residue. Next, the dried residue obtained above was pulverized with a mill mixer, and the pulverized product was sieved with a sieve having an opening of 0.850 mm. to collect the pulverized product that passed through the sieve (hereinafter referred to as the "passed pulverized product"). Then, to 100 g of the passed pulverized product, 11.4 g of Asper powder ® Pro manufactured by Kohsei foods Inc., and 22.2 g of water were added, and the passed pulverized product was subjected to enzymatic treatment at 40 °C for 46 hours to obtain a treated product. Subsequently, the treated product was dried for 2 hours in an oven with the upper heater temperature set at 100 °C and the lower heater temperature set at 90 °C, to obtain the desired cocoa-like raw material.

(2) Preparation of Chocolate-Like Food

The cocoa-like raw material, sugar, whole milk powder, lactose, cocoa butter substitute oil and fat, soybean lecithin and vanillin were mixed to prepare a dough so that the cocoa-like raw material accounted for 10.7 mass%, sugar accounted for 33.8 mass%, whole milk powder accounted for 13.2 mass%, lactose accounted for 4.6 mass%, cocoa butter substitute oil and fat as vegetable oil and fat accounted for 37.3 mass%, soybean lecithin as emulsifier accounted for 0.3 mass%, and vanillin as flavor accounted for 0.1 mass%.

(3) Aroma Analysis of Chocolate-Like Food

0.5 g of the above chocolate-like food was finely pulverized, the powder was added to 10 mL of a glass vial, and the glass vial was sealed with a cap with a septum. Next, the aroma components in the glass vial were collected in a Carbon B & X tube at 25 °C (adsorption volume 750 mL) and in a TENAX tube at 80 °C by using the MVM-DHS (Multi Volatile Method-Dynamic HeadSpace) method. Note that the MVM-DHS method is a method of heating and purging a sample in a glass vial to transfer the aroma component to a headspace and concentrate the aroma component in an adsorbent. In this method, the aroma component can be efficiently collected in the headspace. Then, after each tube was dry-purged in order to remove moisture, each tube was heated to thermally desorb the aroma component in each tube, and the aroma component was introduced into GC/MS to perform GC/MS analysis. The DHS conditions, the conditions of the thermal desorption apparatus, and the GC/MS conditions were as follows.

(DHS Conditions)

Incubation:25 °C 750 mL, 80 °C 3000 mL
Trap:30 °C
Dry purge: 30 °C, 750 mL
Apparatus: GERSTEL DHS
(Conditions of Thermal Desorption Device)

Desorption temperature: 40 °C (0.2 minutes) to 250 °C (held for 3 minutes)
Apparatus: GERSTEL TDU

(GC/MS Conditions)

Column: InertCapPure-WAX (60 m×0.25 mm I.D., Film 0.25 μm)
Column temperature: 50 °C (5 minutes) to 240 °C (3 °C/minute)
Injection temperature: 10 °C to 250 °C (12 °C/sec, held for 5 minutes)
Injection volume: 15 mL (Multi Hot Injection and Trap)
Flow rate: 2.2 mL/min
Splitless:1.0 minute
Apparatus: Agilent GC7890, MSD5975C, PFPD

As a result of the above aroma analysis, isovaleraldehyde, hexanoic acid, phenols, furan-pyran-based compounds, pyridine, 1-furfuryl-2-formylpyrrole, pyridinol, furfuryl methyl disulfide, 2-thiophenemethanol, thioethers, n-butanoic acid, cyclotene, maltol, 2,3-dihydro-3,5-dihydroxy-6-methyl 4H-pyran-4-one were detected as characteristic aroma components.

Isovaleraldehyde is a top flavor of cacao, hexanoic acid and n-butanoic acid are acid odor sources, phenols are walnut skin-like flavor sources, furan, pyran-based compounds are caramel-like flavor sources, pyridine is a chemical-like stimulant odor source, furfuryl methyl disulfide is a scorch-like roasted flavor source, thioethers are pickle flavor sources, maltol is a sugar-like flavor source, and cyclotene is a maple-like flavor source. The content of isovaleraldehyde in the chocolate-like food was about three times that in the chocolate food of COMPARATIVE EXAMPLE 4, about three times that in the chocolate food of COMPARATIVE EXAMPLE 5, and about seven times that in the chocolate food of COMPARATIVE EXAMPLE 6.

(COMPARATIVE EXAMPLE 4)

(1) Preparation of Chocolate Food

Cocoa powder, sugar, whole milk powder, lactose, cocoa butter substitute oil and fat, soybean lecithin and vanillin were mixed to prepare a dough so that cocoa powder accounted for 10.7 mass%, sugar accounted for 33.8 mass%, whole milk powder accounted for 13.2 mass%, lactose accounted for 4.6 mass%, cocoa butter substitute oil and fat as vegetable oil and fat accounted for 37.3 mass%, soybean lecithin as an emulsifier accounted for 0.3 mass%, and vanillin as a flavor accounted for 0.1 mass%. Then, chocolate food was prepared from the dough in a conventional manner.

(2) Aroma Analysis of Chocolate Food

The chocolate food was subjected to aroma analysis according to the method described in the section of "(3) Aroma Analysis of Chocolate-Like Food" in WORKING EXAMPLE 28. As a result, fatty acids, tetramethylpyrazine, sulfer dioxide, and sulfrol were detected as characteristic aroma components in the chocolate food.

Note that fatty acids are acid odor sources, tetramethylpyrazine is a heavy nut-like aroma source, and sulfrol is an egg-like aroma source. Isovaleraldehyde was also detected in this chocolate food, but the content thereof was about one third of that in the chocolate-like food according to WORKING EXAMPLE 28.

(COMPARATIVE EXAMPLE 5)

(1) Preparation of Chocolate Food

Cacao mass, sugar, whole milk powder, lactose, cocoa butter substitute oil and fat, soybean lecithin and vanillin were mixed to prepare a dough so that the cacao mass accounted for 22.3 mass%, the sugar accounted for 33.8 mass%, the whole milk powder accounted for 13.2 mass%, the lactose accounted for 4.6 mass%, cocoa butter substitute oil and fat as vegetable oil and fat accounted for 25.7 mass%, soybean lecithin as an emulsifier accounted for 0.3 mass%, and vanillin as a flavor accounted for 0.1 mass%. Then, chocolate food was prepared from the dough in a conventional manner. Note that the formulation was determined so that the amount of fat and oil in the chocolate food of this COMPARATIVE EXAMPLE was the same as the amount of fat and oil in the chocolate food of COMPARATIVE EXAMPLE 4, assuming that cocoa butter was contained in an amount of 52 mass% in the cacao mass.

(2) Aroma Analysis of Chocolate Food

The chocolate food was subjected to aroma analyses according to the method described in the section of "(3) Aroma Analysis of Chocolate-Like Food" in WORKING EXAMPLE 28, and acetoin, 2-pentyl benzoate, guaiacol, phenethyl-based compounds, tetramethylpyrazine, sulfer dioxide, sulfrol, and furaneol were detected as characteristic aroma components.

Acetoin is a butter-like aroma source, guaiacol is a walnut skin-like aroma source, phenethyl compounds are honey-like aroma sources, tetramethylpyrazine is a heavy nut-like aroma source, sulfurol is an egg-like aroma source, fatty acids are an acid odor source, and furaneol is a syrup-like sweet aroma source. Isovaleraldehyde was also detected in this chocolate food, but the content thereof was about one third of that in the chocolate-like food according to WORKING EXAMPLE 28.

(COMPARATIVE EXAMPLE 6)

(1) Preparation of Cocoa-Like Raw Material

A desired cocoa-like raw material was obtained in the same manner as in WORKING EXAMPLE 28, except that the Asper powder ® Pro was replaced with a deactivated Asper powder ® Pro. The deactivated Asper powder ® Pro was prepared by heating the Asper powder ® Pro at 90 °C.

(2) Preparation of Chocolate-Like Food

A chocolate-like food was prepared according to the method described in the section of "(2) Preparation of Chocolate-Like Food" of WORKING EXAMPLE 28., except that the cocoa-like raw material was replaced with the above-mentioned cocoa-like raw material.

(3) Aroma Analysis of Chocolate Food

The chocolate-like food was subjected to aroma analyses according to the method described in the section of "(3) Aroma Analysis of Chocolate-Like Food" in WORKING EXAMPLE 28, and monoterpenes, fatty acids, phenols, furan-based compounds, pyridine, dimethylpyrazine, pyridinol, pyrroles, furfuryl methyl disulfide, 2-thiophenemethanol, hexanoic acid, n-butanoic acid, cyclotene, and maltol were detected as characteristic aroma components in the chocolate-like food.

Fatty acids are acid odor sources, phenols are walnut thin skin-like aroma sources, furan-based compounds are caramel-like aroma sources, pyridine is a chemical-like pungent odor source, dimethylpyrazine is a nut-like aroma source, furfural methyl disulfide is a scorch-like roasted aroma source, maltol is a sugar-like aroma source, and cyclotene is a maple-like aroma source. Isovaleraldehyde was also detected in this chocolate food, but the content thereof was about 1/7 of that in the chocolate-like food according to WORKING EXAMPLE 28.

**WORKING EXAMPLE 29**

(1) Preparation of Cocoa-Like Raw Material

First, wet extraction residue of coffee beans was placed in an oven set to an upper heater temperature of 100 °C and a lower heater temperature of 90 °C to dry them until the water content thereof became 5 mass% or less to obtain dried residue. Next, the dried residue obtained above was pulverized with a mill mixer, and the pulverized product was sieved with a sieve having an opening of 0.850 mm to collect the pulverized product that passed through the sieve (hereinafter referred to as the "passed pulverized product"). Then, to 100 g of the passed pulverized product, 10.1 g of Asper powder ® Pro manufactured by Kohsei foods Inc., and 24.4 g of water were added, and the passed pulverized product was subjected to enzymatic treatment at 55 °C for 47 hours to obtain a treated product. Subsequently, the treated product was dried for 2 hours in an oven with the upper heater temperature set at 100 °C and the lower heater temperature set at 90 °C to obtain the desired cocoa-like raw material.

(2) Preparation of Chocolate-Like Food

The above-mentioned cocoa-like raw material, sugar, whole milk powder, lactose, cocoa butter substitute oil and fat, soybean lecithin and vanillin were mixed to prepare a dough so that the cocoa-like raw material accounted for 10.5 mass%, sugar accounted for 33.3 mass%, whole milk powder accounted for 12.9 mass%, lactose accounted for 4.5 mass%, cocoa butter substitute oil and fat as vegetable oil and fat accounted for 38.5 mass%, soybean lecithin as emulsifier accounted for 0.2 mass% and vanillin as flavor accounted for 0.1 mass%.

(3) Analysis of Free Amino Acid of Chocolate-Like Food

Here, the quantitative analysis of free amino acids in the chocolate-like food was performed using a high-performance liquid chromatography. In this case, a fluorescence detector was used as a detector. The analysis method and analysis results of each component will be described in detail below.

2.0 g to 3.0 g of Chocolate-Like Food, which were as finely pulverized as possible, were weighed into a centrifuge tube, and after adding 20 mL of 0.5 mol/L of trichloroacetic acid to the centrifuge tube, the content of the centrifuge tube was stirred for 20 minutes with a stirrer, and then the centrifuge tube was set in a centrifuge and subjected to centrifugal separation treatment for 15 minutes in a 10000 rpm under a temperature environment of 4 °C. Next, the supernatant in the centrifuge tube was transferred to another centrifuge tube, 20 mL of n-hexane was added to the other centrifuge tube, the contents were stirred for 20 minutes with a stirrer, the other centrifuge tube was set in a centrifuge, and the centrifuge was subjected to centrifugal separation treatment for 15 minutes in a 10000 rpm under a temperature environment of 4 °C. The aqueous phase was then neutralized with 0.3 mol/L of lithium hydroxide, and the volume of the aqueous phase was adjusted with a lithium citrate buffer. The aqueous phase was filtered through a 0.45 µm membrane filter to obtain filtrate as sample solution.

The sample solution obtained as described above was injected into a high performance liquid chromatography apparatus set as follows.

Apparatus: SHIMADZU HPLC Prominence amino acid analysis system
Column: Shim-pack Amino-Li (100 mmL.×6.0 mml. D)
Ammonia trap column: Shim-pack ISC-30/S0504Li (50 mmL.×4. 0 mml. D)
Mobile phase: Shimadzu amino acid mobile phase kit Li type (Liquid A, Liquid B, Liquid C)
Flow rate: 0.6 mL/min
Column temperature: 39 °C
Detection wavelengths: 270 nm
Injection amount: 10 µL

The detection conditions were as follows.

Reaction reagent: Shimadzu amino acid analysis kit OPA reagent
Flow rate of reagents: 0.2 mL/min
Reaction temperature: 39 °C
Reaction tube: piping kit for amino acid analysis
Detector: fluorescence detection (excitation wavelengths: 350 nm, fluorescence wavelengths: 450 nm)

The amount of each free amino acid was calculated by the following formula.

$$\text{Amount of each free amino acids (mg/100 g)}=(A\times V\times D) / (W\times 1000)\times 100$$

A: Concentration (µg/mL) of each free amino acid in sample solution determined from calibration curve
V: Amount (mL)of sample solution
D: Dilution factor
W: Collected amount (g) of sample

As a result, amount of the free amino acid in the chocolate-like food according to the present WORKING EXAMPLE was as shown in Table 8 below.

(COMPARATIVE EXAMPLE 7)

(1) Preparation of Cocoa-Like Raw Material

A desired cocoa-like raw material was obtained in the same manner as in WORKING EXAMPLE 29, except that the Asper powder ® Pro was replaced with a deactivated Asper powder ® Pro. The deactivated Asper powder ® Pro was prepared by heating the Asper powder ® Pro at 90 °C.

(2) Preparation of Chocolate-Like Food

A chocolate-like food was prepared according to the method described in the section of "(2) Preparation of Chocolate-Like Food" of WORKING EXAMPLE 29., except that the cocoa-like raw material was replaced with the above-mentioned cocoa-like raw material.

(3) Analysis of Free Amino Acid of Chocolate-Like Food

The quantitative analysis of free amino acids in the chocolate-like food was performed according to the method described in the section of "(3-2) Quantitative Analysis of Free Amino Acids" in WORKING EXAMPLE 29, and the results shown in Table 8 below were obtained.

[TABLE 8]

| Component (content unit: mg/100g) | Working Example 29 | Comparative Example 7 |
|---|---|---|
| Taurine | 3.2 | 2.7 |
| L-Aspartic Acid | Less than 0.12 (N.D.) | Less than 0.12 (N.D.) |
| L-Hydroxyproline | Less than 0.12 (N.D.) | Less than 0.12 (N.D.) |
| L-Threonine | Less than 0.11 (N.D.) | Less than 0.11 (N.D.) |
| L-Serine | Less than 0.09 (N.D.) | Less than 0.09 (N.D.) |
| L-Glutamic Acid | Less than 1.4 (N.D.) | Less than 1.4 (N.D.) |
| L-Proline | 1.3 | 0.26 |
| Glycine | 1 | 0.55 |
| L-Alanine | 4.7 | 0.4 |
| L-Citrulline | Less than 0.16 (N.D.) | Less than 0.16 (N.D.) |
| L-Valine | 0.79 | 0.13 |
| L-Cystine | Less than 0.21 (N.D.) | Less than 0.21 (N.D.) |
| L-Methionine | Less than 0.13 (N.D.) | Less than 0.13 (N.D.) |
| L-Isoleucine | 0.67 | 0.1 |
| L-Cystathionine | Less than 0.10 (N.D.) | Less than 0.10 (N.D.) |
| L-Leucine | 5 | 0.92 |
| L-Tyrosine | 3.7 | 2.2 |
| L-Phenylalanine | 1.3 | Less than 0.15 (N.D.) |
| 4-Aminobutyric Acid (GABA) | 0.09 | Less than 0.09 (N.D.) |
| L-Tryptophan | 6.5 | Less than 0.9 (N.D.) |
| L-Histidine | Less than 0.14 (N.D.) | Less than 0.14 (N.D.) |
| L-Ornithine | 0.24 | Less than 0.12 (N.D.) |
| L-Lysine | 1.9 | 0.27 |
| L-Arginine | 2.7 | 0.19 |

As is clear from Table 8, the chocolate-like food of WORKING EXAMPLE 29 contained about 1.2 times as much taurine, about 5 times as much L-proline, about 1.8 times as much glycine, about 11.8 times as much L-alanine, about 6.1 times as much L-valine, about 6.7 times as much L-isoleucine, about 5.4 times as much L-leucine, about 1.7 times as much L-tyrosine, about 7 times as much L-lysine, and about 14.2 times as much L-arginine as the chocolate-like food of COMPARATIVE EXAMPLE 7.

**WORKING EXAMPLE 30**

(1) Preparation of Cocoa-Like Raw Material

First, wet extraction residue of coffee beans was placed in an oven set to an upper heater temperature of 100 °C and a lower heater temperature of 90 °C to dry them until the water content thereof became 5 mass% or less to obtain dried residue. Next, the dried residue obtained above was pulverized by passing through a millstone grinder (Super Mass Colloider manufactured by Masuko Sangyo Co., Ltd.) once, and the pulverized product was sieved using a sieve having an opening of 0.850 mm to collect the pulverized product that passed through the sieve (hereinafter referred to as the "passed pulverized product"). The mean particle diameter D50 of the pulverized product in a wet state was determined by the method described in WORKING EXAMPLE 1, and the mean particle diameter was 0.481 mm. Then, to the 100 g of the passed pulverized product, 1 g of Asper powder ® Pro manufactured by Kohsei foods Inc., and 250 g of water were added, and the passed pulverized product was subjected to enzymatic treatment at 55 °C for 5 hours to obtain a treated product. Subsequently, the treated product was dried for 2 hours in an oven with the upper heater temperature set at 100 °C and the lower heater temperature set at 90 °C to obtain the desired cocoa-like raw material. In this case, the ratio of the mass of the Asper powder ® Pro to the mass of the passed pulverized product was 1 mass% (= 1 g/100 g×100).

(2) Analysis of Free Amino Acids of Cocoa-Like Raw Material

The content of free amino acids in the cocoa-like raw material of this WORKING EXAMPLE was quantitatively analyzed according to the method described in the section of "(3) Analysis of Free Amino Acid in Chocolate-Like Food" of WORKING EXAMPLE 29, and the results shown in Table 9 below were obtained.

**WORKING EXAMPLE 31**

(1) Preparation of Cocoa-Like Raw Material

A desired cocoa-like raw material was obtained in the same manner as in WORKING EXAMPLE 30, except that the amount of Asper powder ® Pro added was changed to 15 g and the time for enzymatic treatment of the dried residue was changed to 2.5 hours. In this case, the ratio of the mass of the Asper powder ® Pro to the mass of the passed pulverized product was 15 mass% (=15 g/100 g×100). The mean particle diameter D50 of the passed pulverized product in a wet state was determined according to the method described in WORKING EXAMPLE 1, and the mean particle diameter was 0.481 mm.

(2) Analysis of Free Amino Acids of Cocoa-Like Raw Material

The content of free amino acids in the cocoa-like raw material of this WORKING EXAMPLE was quantitatively analyzed according to the method described in the section of "(3) Analysis of Free Amino Acid of Chocolate-Like Food" of WORKING EXAMPLE 29, and the results shown in Table 9 below were obtained.

**WORKING EXAMPLE 32**

(1) Preparation of Cocoa-Like Raw Material

A desired cocoa-like raw material was obtained in the same manner as in WORKING EXAMPLE 30, except that the amount of Asperpowder ® Pro added was changed to 15 g and the time for enzymatic treatment of the dried residue was changed to 40 hours. In this case, the ratio of the mass of the Asper powder ® Pro to the mass of the passed pulverized product was 15 mass% (=15 g/100 g×100). The mean particle diameter D50 of the passed pulverized product in a wet state was determined according to the method described in WORKING EXAMPLE 1, and the mean particle diameter was 0.481 mm.

(2) Analysis of Free Amino Acids of Cocoa-Like Raw Material

The content of free amino acids in the cocoa-like raw material of this WORKING EXAMPLE was quantitatively analyzed according to the method described in the section of "(3) Analysis of Free Amino Acids of Chocolate-Like Food" of WORKING EXAMPLE 29, and the results shown in Table 9 below were obtained.

**WORKING EXAMPLE 33**

(1) Preparation of Cocoa-Like Raw Material

A desired cocoa-like raw material was obtained in the same manner as in WORKING EXAMPLE 30, except that the amount of Asperpowder ® Pro added was changed to 25 g and the time for enzymatic treatment of the dried residue was changed to 65 hours. In this case, the ratio of the mass of the Asper powder ® Pro to the mass of the passed pulverized product was 25 mass% (=25 g/100 g×100). The mean particle diameter D50 of the passed pulverized product in a wet state was determined according to the method described in WORKING EXAMPLE 1, and the mean particle diameter was 0.481 mm.

(2) Analysis of Free Amino Acids of Cocoa-Like Raw Material

The content of free amino acids in the cocoa-like raw material of this WORKING EXAMPLE was quantitatively analyzed according to the method described in the section of "(3) Analysis of Free Amino Acids of Chocolate-Like Food" of WORKING EXAMPLE 29, and the results shown in Table 9 below were obtained.

**WORKING EXAMPLE 34**

(1) Preparation of Cocoa-Like Raw Material

A desired cocoa-like raw material was obtained in the same manner as in WORKING EXAMPLE 30, except that 1 g of Asper powder ® Pro was replaced with 0.3 g of Protease M "Amano" SD manufactured by Amano Enzymes Inc., the time for enzymatic treatment of the passed pulverized product was changed to 20 hours, and the temperature for enzymatic treatment was changed to 40 °C. In this case, the ratio of the mass of Protease M "Amano" SD to the mass of the passed pulverized product was 0.3 mass% (=0.3 g/100 g×100). The mean particle diameter D50 of the passed pulverized product in a wet state was determined according to the method described in WORKING EXAMPLE 1, and the mean particle diameter was 0.481 mm.

(2) Analysis of Free Amino Acids of Cocoa-Like Raw Material

The content of free amino acids in the cocoa-like raw material of this WORKING EXAMPLE was quantitatively analyzed according to the method described in the section of "(3) Analysis of Free Amino Acids of Chocolate-Like Food" of WORKING EXAMPLE 29, and the results shown in Table 9 below were obtained.

(COMPARATIVE EXAMPLE 8)

(1) Preparation of Passed pulverized Product

First, wet extraction residue of coffee beans was placed in an oven set to an upper heater temperature of 100 °C and a lower heater temperature of 90 °C to dry them until the water content thereof became 5 mass% or less to obtain dried residue. Next, the dried residue obtained above was pulverized by passing through a millstone grinder (Super Mass Colloider manufactured by Masuko Sangyo Co., Ltd.) once, and the pulverized product was sieved using a sieve having an opening of 0.850 mm to collect the pulverized product that passed through the sieve (hereinafter referred to as the "passed pulverized product"). The mean particle diameter D50 of the pulverized product in a wet state was determined by the method described in WORKING EXAMPLE 1, and the mean particle diameter was 0.481 mm.

(2) Analysis of Free Amino Acids of Passed Pulverized Product

The content of free amino acids in the passed pulverized product according to the present COMPARATIVE EXAMPLE was quantitatively analyzed according to the method shown in the column "(3) Analysis of Free Amino Acids of Chocolate-Like Food" of WORKING EXAMPLE 29, and the results shown in Table 9 below were obtained. Note that, only in the analysis of free amino acids in the passed pulverized product, the amount of the passed pulverized product collected in the centrifuge tubes was set to 1.0 g to 3.0 g.

[TABLE 9]

| Component (content unit: mg/100g) | Working Example 30 | Working Example 31 | Working Example 32 | Working Example 33 | Working Example 34 | Comparative Example 8 |
|---|---|---|---|---|---|---|
| Taurine | 0.33 | 2.8 | 5.6 | 12 | 0.34 | 0.12 |
| L-Aspartic Acid | 6 | 52 | 288 | 619 | 3.4 | 1.1 |
| L-Hydroxyproline | 1.8 | 78 | 321 | 793 | Less than 0.26 (N.D.) | Less than 0.13 (N.D.) |
| L-Threonine | Less than 0.24 (N.D.) | 1.5 | 6.3 | 19 | 3.2 | Less than 0.12 (N.D.) |
| L-Serine | 0.33 | 6.4 | 20 | 44 | 3.2 | Less than 0.11 (N.D.) |
| L-Glutamic Acid | 1 | 29 | 167 | 611 | 15 | Less than 0.15 (N.D.) |
| L-Proline | 0.3 | 2 | 4.7 | 5.8 | 5.4 | 0.16 |
| Glycine | 0.4 | 1.2 | 2.5 | 2.2 | 3.3 | 0.23 |
| L-Alanine | 1.1 | 4.4 | 9.9 | 18 | 4.3 | 0.59 |
| L-Citrulline | Less than 0.35 (N.D.) | Less than 0.35 (N.D.) | Less than 0.35 (N.D.) | Less than 0.35 (N.D.) | Less than 0.35 (N.D.) | Less than 0.18 (N.D.) |
| L-Valine | 0.46 | 1.7 | 4.2 | 3.8 | 8.6 | Less than 0.12 (N.D.) |
| L-Cystine | Less than 0.30 (N.D.) | Less than 0.80 (N.D.) | Less than 0.80 (N.D.) | Less than 0.30 (N.D.) | Less than 0.30 (N.D.) | Less than 0.15 (N.D.) |
| L-Methionine | Less than 0.30 (N.D.) | Less than 0.30 (N.D.) | Less than 0.80 (N.D.) | Less than 0.30 (N.D.) | Less than 0.30 (N.D.) | Less than 0.15 (N.D.) |
| L-Isoleucine | 0.34 | 1.5 | 5 | 9.4 | 5.4 | Less than 0.13 (N.D.) |
| L-Cystathionine | Less than 0.22 (N.D.) | Less than 0.22 (N.D.) | Less than 0.22 (N.D.) | Less than 0.22 (N.D.) | Less than 0.22 (N.D.) | Less than 0.11 (N.D.) |
| L-Leucine | 2.5 | 12 | 38 | 22 | 22 | 0.27 |
| L-Tyrosine | 1.3 | 6.4 | 9.1 | 11 | 7.7 | Less than 0.18 (N.D.) |
| L-Phenylalanine | 0.61 | 2.8 | 5.7 | 6.1 | 8.4 | Less than 0.17 (N.D.) |
| 4-Aminobutyric Acid (GABA) | Less than 0.21 (N.D.) | 1.1 | 0.8 | 0.71 | Less than 0.21 (N.D.) | 0.15 |
| L-Tryptophan | 0.5 | 4.2 | 13 | 24 | 1 | 0.24 |
| L-Histidine | Less than 0.31 (N.D.) | 2.3 | 2.7 | 2.3 | 1.3 | Less than 0.16 (N.D.) |
| L-Ornithine | Less than 0.26 (N.D.) | 0.8 | 0.6 | 0.6 | Less than 0.26 (N.D.) | Less than 0.13 (N.D.) |
| L-Lysine | 0.33 | 4.5 | 4.9 | 4.1 | 1.7 | Less than 0.16 (N.D.) |
| L-Arginine | Less than 1.74 (N.D.) | 6.2 | 11 | 10 | Less than 1.7 (N.D.) | Less than 0.87 (N.D.) |

**Claims**

1. A method for producing a food raw material, comprising:

   a first drying step for drying an extraction residue of coffee beans to obtain a dried residue,
   a treatment step for subjecting the dried residue to fermentation treatment or enzyme treatment to obtain a treated product.

2. The method for producing the food raw material according to claim 1,
   wherein in the treatment step, the dried residue having a mean particle diameter in a range of 0.015 mm or more and 2.20 mm or less is fermented or enzymatically treated.

3. The method for producing the food raw material according to claim 1,
   The treatment step includes:

   an addition step for adding a microorganism or an enzyme and water to the dried residue to obtain a treated source-containing dried residue,
   a reaction step for treating the treatment source-containing dried residue at a predetermined temperature for a predetermined time to obtain the treated product.

4. The method for producing a food raw material according to claim 3, further comprising a second drying step for drying the treated product without squeezing the treated product.

5. A food raw material obtained by the method for producing a food raw material according to claim 1.

6. A food obtained by processing the food raw material according to claim 5.

# INTERNATIONAL SEARCH REPORT

International application No.

**PCT/JP2023/041199**

| A. | CLASSIFICATION OF SUBJECT MATTER |
|---|---|

*A23F 5/10*(2006.01)i; *A23G 1/48*(2006.01)i; *A23L 5/00*(2016.01)i
FI:   A23F5/10; A23G1/48; A23L5/00 J; A23L5/00 K

According to International Patent Classification (IPC) or to both national classification and IPC

| B. | FIELDS SEARCHED |
|---|---|

Minimum documentation searched (classification system followed by classification symbols)

A23F5/10; A23G1/48; A23L5/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 10-113163 A (HAGIWARA, Yoshihide) 06 May 1998 (1998-05-06) | 1-3, 5-6 |
| | paragraphs [0014]-[0043] | |
| A | paragraphs [0014]-[0043] | 4 |
| A | JP 2022-115087 A (SOE LTD.) 08 August 2022 (2022-08-08) | 1-6 |
| | paragraphs [0032]-[0069] | |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 January 2024** | **06 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2023/041199**

| Patent document cited in search report | | | Publication date (day/month/year) | Patent family member(s) | | | Publication date (day/month/year) |
|---|---|---|---|---|---|---|---|
| JP | 10-113163 | A | 06 May 1998 | US | 2004/0180112 | A1 | |
| | | | | paragraphs [0014]-[0035] | | | |
| | | | | EP | 837126 | A2 | |
| | | | | CA | 2216760 | A1 | |
| JP | 2022-115087 | A | 08 August 2022 | (Family: none) | | | |

Form PCT/ISA/210 (patent family annex) (July 2022)

**EP 4 623 696 A1**

**Patent documents cited in the description**

- JP 2022115087 A